# EUROPÄISCHE PATENTSCHRIFT

(11) **EP 2 673 600 B1**
(45) Veröffentlichungstag und Bekanntmachung des Hinweises auf die Patenterteilung: **29.04.2015**
(21) Anmeldenummer: 12709495.1
(22) Anmeldetag: 07.02.2012
(51) Int. Cl.: G01G 13/02, B01F 15/04, B29C 45/18

(54) **VERFAHREN ZUR DOSIERUNG VON SCHÜTTGUT**
METHOD FOR DOSING BULK MATERIAL
PROCÉDÉ DE DOSAGE DE MATIÈRES EN VRAC

(30) Priorität: 09.02.2011 AT 1742011
(43) Veröffentlichungstag der Anmeldung: 18.12.2013
(73) Patentinhaber: Wittmann Kunststoffgeräte GmbH, 1220 Wien (AT)
(72) Erfinder: FUX, Erhard, A-1230 Wien (AT)
(74) Vertreter: Krause, Peter
(86) Internationale Anmeldenummer: PCT/AT2012/000021
(87) Internationale Veröffentlichungsnummer: WO 2012/106740

(56) Entgegenhaltungen:
- DE-A1- 19 528 636
- US-A- 3 822 866
- US-A1- 2008 049 546

## Beschreibung

Die Erfindung betrifft ein Verfahren zur Dosierung von Schüttgut, insbesondere von Kunststoff-Granulat, für Kunststoff-Granulat verarbeitende Maschinen, insbesondere für Spritzgussmaschinen, wobei verschiedene Mengen von verschiedenen Kunststoff-Granulaten nach frei einstellbaren Rezepten in Batches abgefüllt werden und jede einzelne Art eines Kunststoff-Granulates, wie beispielsweise Neuware, Masterbatch, Additive und/oder Mahlgut, aus einem Materialtrichter über ein Materialventil nacheinander in einen Wiegebehälter abgelassen wird, im Wiegebehälter gewogen und die Rezeptmenge anschließend in einen Mischer vermischt wird.

Eine Abfolge der oben aufgezeigten Verfahrensschritte ist in der einschlägigen Industrie heute üblich.

Darüber hinaus ist aus der DE 696 27 717 T2 ein Verfahren und ein gravimetrischer Mischer zum Abgeben von abgemessenen Mengen von granularen Materialien und Farbmitteln, insbesondere Pigmente in flüssiger Form, bekannt.

Weiters ist aus der DE 05 075 472 T1 ein gravimetrischer Mischer und Fülltrichter mit integrierten Abgabeventil für körniges Material bekannt.

Weiter ist aus der US 3 822 866 ein Verfahren zur Dosierung von Schüttgut mit einer Parallelfüllung bekannt.

Ferner ist aus der DE 697 32 659 T2 ein gravimetrischer Mischer bekannt, der einen Rahmen, einen abnehmbaren Materialvorratstrichter mit einem Ventil, einen Wiegebehälter mit Gewichtserfassung und eine Mischkammer unter dem Wiegebehälter umfasst.

Wie eingangs schon aufgezeigt, werden verschiedene Mengen von verschiedenen Kunststoff-Granulaten nach frei einstellbaren Rezepten in Batches abgefüllt und jede einzelne Art eines Kunststoff-Granulates, wie beispielsweise Neuware, Masterbatch, Additive und/oder Mahlgut, wird aus einem Materialtrichter über ein Materialventil nacheinander in einen Wiegebehälter abgelassen.

In vorwiegenden Fällen findet eine Rezeptur Verwendung, die die einzelnen Arten der Kunststoff-Granulate, wie beispielsweise Neuware, Mahlgut, Masterbatch, und/oder Additive beinhaltet. Dabei stehen Neuware und Mahlgut in einem gewichtsmäßigen Missverhältnis zu Masterbatch und Additiv. So können die Anteile von Neuware und Mahlgut etwa 70% und 30% betragen und Masterbatch bzw. Additiv 1 bis 2% bezogen auf die Neuware betragen. Für jede Art der Kunststoff-Granulate ist ein eigener Behälter vorgesehen.

Aufgabe der Erfindung ist es daher ein Verfahren der eingangs genannten Art zu schaffen, das zeitmäßig zu Rationalisierungen führt.

Die Aufgabe wird durch die in den unabhängigen Ansprüchen definierte Erfindung gelöst.

Das erfindungsgemäße Verfahren ist dadurch gekennzeichnet, dass die für die Rezeptur überproportionale Menge von Kunststoff-Granulat, vorzugsweise die Neuware und/oder Mahlgut, mit einer Parallelfüllung oder Mehrfachparallelfüllung, aus mindestens zwei Materialtrichtern, in den Wiegebehälter abgefüllt wird. Mit der Erfindung ist es erstmals möglich, den Durchsatz für die Arten der Kunststoff-Granulate, die gemäß der Rezeptur überproportional Verwendung finden, zu erhöhen, wodurch die Batch-Zusammenstellung in kürzester Zeit erfolgt.

Ein weiterer Vorteil der Parallel- und Mehrfachparallelfüllung ist darin gelegen, dass durch eine Brückenbildung des Kunststoff-Granulates beim Abfüllen aus einem Materialtrichter, keine Betriebsunterbrechungen mehr gegeben sind, da ja zumindest aus dem zweiten Materialtrichter abgefüllt wird.

Nach einem besonderen Merkmal der Erfindung wird die Menge während der Abfüllung kontinuierlich gewogen. Dadurch wird eine exakte Dosierung aller Batches erreicht, wobei Überdosierungen teurer Arten von Kunststoff-Granulat vermieden werden. Diese exakten Dosierungen führen zu kostenmäßiger und qualitativer Optimierung des Materialdurchsatzes für die Produktanforderung. Ein statistisches Durchschnittsrechnen zum Erreichen des Zielgewichtes, das zum Stand der Technik bekannte, so genannte "Jagen", findet keine Verwendung.

Gemäß der Erfindung wird die Parallelfüllung oder die Mehrfachparallelfüllung knapp vor Erreichen der Zielmenge, vorzugsweise bei etwa 95% der Zielmenge, gestoppt. Dadurch kann eine kontrollierte Feindosierung bis zur Zielmenge erfolgen. Auch durch diesen Verfahrensschritt wird eine Überdosierung vermieden.

Nach einem weiteren, besonderen Merkmal der Erfindung wird nach Beendigung der Parallelfüllung oder Mehrfachparallelfüllung eine andere Art eines Kunststoff-Granulates, beispielsweise das Additiv und/oder das Masterbatch, in den Wiegebehälter dosiert und auf Grund dieser tatsächlich zudosierten Menge die Zielmenge der Parallelfüllung oder Mehrfachparallelfüllung an Kunststoff-Granulat-Menge bestimmt und in den Wiegebehälter abgefüllt. Auch dieser innovative Verfahrensschritt vermeidet eine Überdosierung. Nach Beendigung der Parallel- bzw. Mehrfachparallelfüllung wird beispielsweise die Rezepturmenge an Additiv in den Wiegebehälter dosiert. Auf Grund der nun tatsächlich gewogenen Menge an Additiv wird die Zielmenge der Parallel- bzw. Mehrfachparallelfüllung hochgerechnet und entsprechend feindosiert abgefüllt. Die Batch-Zusammenstellung entspricht somit immer der exakten Rezeptur und sichert somit eine gleichmäßig hohe Qualität des Endproduktes.

Gemäß der Erfindung erfolgt zur Erreichung der Zielmenge der Parallelfüllung die Befüllung des Wiegebehälters nur aus einem Materialtrichter über ein Materialventil. Dieser Verfahrensschritt stellt die Feindosierung zur Erreichung der exakten Zielmenge dar.

Aufgabe der Erfindung ist es aber auch, eine Einrichtung zur Durchführung des Verfahrens zu schaffen, die das rationellere Verfahren durch eine bessere Wirtschaftlichkeit, insbesondere bei geringster Standfläche der Einrichtung, noch weiter unterstützt.

Bei der Einrichtung zur Durchführung des Verfahrens ist für jede Art eines Kunststoff-Granulates ein Materialtrichter mit einem Materialventil vorgesehen und unter dem Materialventil sind ein mit einer Waage verbundener Wiegebehälter und unter dem Wiegebehälter ein Mischer angeordnet, wobei für die Waage und die Materialventile eine Steuerung vorgesehen ist. Die erfindungsgemäße Einrichtung ist dadurch gekennzeichnet, dass für die gemäß der Rezeptur überproportionale Menge von Kunststoff-Granulat, vorzugsweise die Neuware und/oder das Mahlgut, mindestens zwei Materialtrichter vorgesehen sind und jeder Materialtrichter ein als Dosierventil ausgebildetes Materialventil aufweist, dass als Waage eine Plattenformwägezelle und als Mischer ein Kugelmischer vorgesehen sind. Mit dieser Erfindung ist es erstmals möglich, den Materialdurchsatz für die überproportionalen Mengen stark zu erhöhen. Da ja für die Feindosierung die Materialventile entsprechend ausgelegt sind, können die Durchsätze nicht beliebig gesteigert werden. So wird durch eine Parallel- oder insbesondere Mehrfachparallelabfüllung des angesprochenen Materials die Abfüllzeit für diese Art des Kunststoff-Granulates stark verkürzt. Eine Verkürzung dieser Abfüllzeit bedeutet in der Abfolge der zeitlichen Verfahrensschritte jedoch auch eine bedeutende Rationalisierung des Ablaufes von der Materialzuführung, also vom Materialdepot, bis zur Maschine, vorzugsweise der Spritzgussmaschine. Natürlich kann in vorteilhafterweise eine modulare Bauweise gewählt werden.

Ein weiterer Vorteil dieser erfindungsgemäßen Einrichtung ist im Dosierventil zu sehen. Derartig schnell arbeitende, abnutzungsbeständige Ventile aus Edelstahl erlauben auch eine effiziente Dosierung von Materialien mit hohem Glasfaseranteil. Hauptmaterialien und Additive werden zielgenau auf das gewünschte Maß dosiert.

Die vorteilhafte Anordnung einer Plattenformwägezelle, die aus zwei voneinander unabhängigen Wiegezellen gebildet wird, produziert ein präzises Wiegesignal, das zur Erhöhung der Qualität beiträgt.

Die runde Form eines hoch effizienten Kugelmischers sorgt für eine optimale Durchmischung des Batch. Der Kugelmischer weist keine toten Ecken auf und es ergeben sich auch keine Rückstände bei der Entleerung. Er garantiert eine homogene Vermischung des Materials.

Eine der prioritären Vorgaben des Kunden ist immer eine minimalste Bauweise der Einrichtung, also eine kleine Standfläche der Einrichtung, mit einem höchstmöglichen Durchsatz der Einrichtung im Betrieb. Die kleine Standfläche wird deshalb gefordert, da die Einrichtung gegebenenfalls auf der Maschine, vorzugsweise der Spritzgussmaschine als schlanker Körper angeordnet werden soll. Entscheidend für den Durchsatz ist die Übergangsfläche von Materialtrichter und Dosierventil in den Wiegebehälter. Auf Grund der geforderten kleinen Standfläche ist jedoch diese Übergangsfläche auch nur begrenzt. Die Übergangsfläche integriert alle Öffnungen von den verschiedenen Materialtrichtern in den Wiegebehälter. Wird also das überproportionale Kunststoff-Granulat nur aus einem Materialtrichter abgefüllt, ist der Durchsatz somit begrenzt. Der innovative Erfindungsgedanke liegt somit darin, dass eine Erhöhung des Durchsatzes, bei minimalster Bauweise der Einrichtung, erstmals möglich ist, wenn zwei oder mehr Öffnungen für den Durchsatz Verwendung finden.

Nach einer Ausgestaltung der Erfindung ist das Dosierventil als selbstschließendes, über einen, vorzugsweise am Gehäuse angeordneten, Pneumatikzylinder öffnendes Materialventil ausgebildet. Durch diese innovative Konstruktion eines pulsenden Klappventils als Dosierventil, ist die Möglichkeit gegeben, alle Materialtrichter, also die Materialtrichter für Neuware, Mahlgut und Additive, mit einem hoch präzisen Ventiltyp auszustatten. Natürlich kommt hier auch der Vorteil zum Tragen, dass einheitliche Bauteile die Wirtschaftlichkeit erhöhen und die Flexibilität für die Auslastung gewährleisten.

Nach einem besonderen Merkmal der Erfindung umfasst die Steuerung eine Rechnereinheit, insbesondere einen Mikroprozessor, der der Messwert der Plattenformwägezelle zugeführt ist und die Rechnereinheit, in der die Rezeptur gespeichert ist, errechnet die Menge der einzelnen Arten der Kunststoff-Granulate und steuert die Dosierventile entsprechend an. Durch einen proprietären adaptiven Regelalgorithmus wird mit der Steuerung eine präzise Dosierung erreicht. Natürlich ist bei dieser Steuerung eine einfachste Bedienung Grundvoraussetzung und somit wird eine hohe Leistungsfähigkeit erreicht. Darüber hinaus gewährleistet die RTLS-Technologie (Real Time Live Scale-Technologie) eine zweistufige progressiv genauer werdende Dosierung für ein exaktes Zielgewicht. Es braucht nicht erwähnt zu werden, dass diese Steuerung Netzwerksfähigkeit zu Zentralrechnern, Laptops und dgl. aufweist. Die Steuereinheit selbst besteht aus elektrischen Standard-Komponenten, die einen zuverlässigen Betrieb und eine einfache Wartung garantieren.

Die Erfindung wird an Hand eines in der Zeichnung dargestellten Ausführungsbeispieles näher erläutert.

Es zeigen:
Fig. 1 einen Schnitt durch die Einrichtung,
Fig. 2 eine Draufsicht auf die Einrichtung gemäß der Fig. 1 und
Fig. 3 ein Diagramm

Die Einrichtung zur Dosierung von Schüttgut, insbesondere von Kunststoff-Granulat, für Kunststoff-Granulat verarbeitende Maschinen, insbesondere für Spritzgussmaschinen, ist modular aufgebaut und besteht aus einem Gehäuse 1 in dem die nachstehend noch näher beschriebenen Einbauten angeordnet sind und aus abnehmbaren Materialtrichtern 2. Für jede Art eines Kunststoff-Granulates ist ein Materialtrichter 2 mit einem Dosierventil 3 vorgesehen. Die Materialtrichter 2 sind einerseits über abnehmbare Materialtrichterabdeckungen verschließbar und weisen anderseits, im abgedeckten Zustand, einen Montageflansch für die Zuführung des Kunststoff-Granulats auf. Zur leichteren Handhabung kann jeder Materialtrichter 2 zwei Griffe aufweisen. Zur bequemeren Reinigung und auch zur Sichtkontrolle kann jeder Materialtrichter 2 ein abnehmbares Sichtfenster aufweisen. Ferner kann der Materialtrichter 2 aus abnutzungsbeständigem Edelstahl bestehen und Schnellverschlüsse zur raschen Abnahme der Materialtrichter 2 vom Gehäuse 1 besitzen.

Unter dem Dosierventil 3 ist ein mit einer Waage verbundener Wiegebehälter 4 und unter dem Wiegebehälter 4 ein Mischer angeordnet. Als Waage ist eine Plattenformwägezelle 5 und als Mischer ein Kugelmischer 6 vorgesehen. Über eine - nicht dargestellte - Steuerung ist die Plattenformwägezelle 5 mit dem Dosierventil 3 verbunden.

Das Dosierventil 3 ist als selbstschließendes Dosierventil 3 ausgebildet, wobei die Öffnung des Dosierventils 3 über einen, vorzugsweise am Gehäuse 1 angeordneten, Pneumatikzylinder erfolgt.

Die Plattenformwägezelle 5 besteht aus zwei voneinander unabhängigen Wiegezellen, die einen äußerst präzisen Wiegemesswert liefern. Der Wiegebehälter 4 sitzt auf Führungen der Wiegezellen und weist einen großen Materialauslasswinkel für eine komplette Entleerung auf.

Der hoch effiziente Kugelmischer 6 weist eine runde Form, ohne tote Ecken, für eine optimale Durchmischung auf, und wird über einen Elektromotor 7 angetrieben.

In der oben aufgezeigten Dosiereinrichtung werden verschiedene Mengen von verschiedenen Kunststoff-Granulaten nach frei einstellbaren Rezepten in Batches abgefüllt. Jede einzelne Art eines Kunststoff-Granulates, wie beispielsweise Neuware, Masterbatch, Additive und/oder Mahlgut, wird aus einem Materialtrichter 2 über das Dosierventil 3 nacheinander in den Wiegebehälter 4 abgelassen, im Wiegebehälter 4 gewogen und die Rezeptmenge anschließend im Kugelmischer 6 vermischt. Für die gemäß der Rezeptur überproportionalen Mengen von Kunststoff-Granulat, vorzugsweise für die Neuware und/oder das Mahlgut, sind mindestens zwei Materialtrichter 2 vorgesehen.

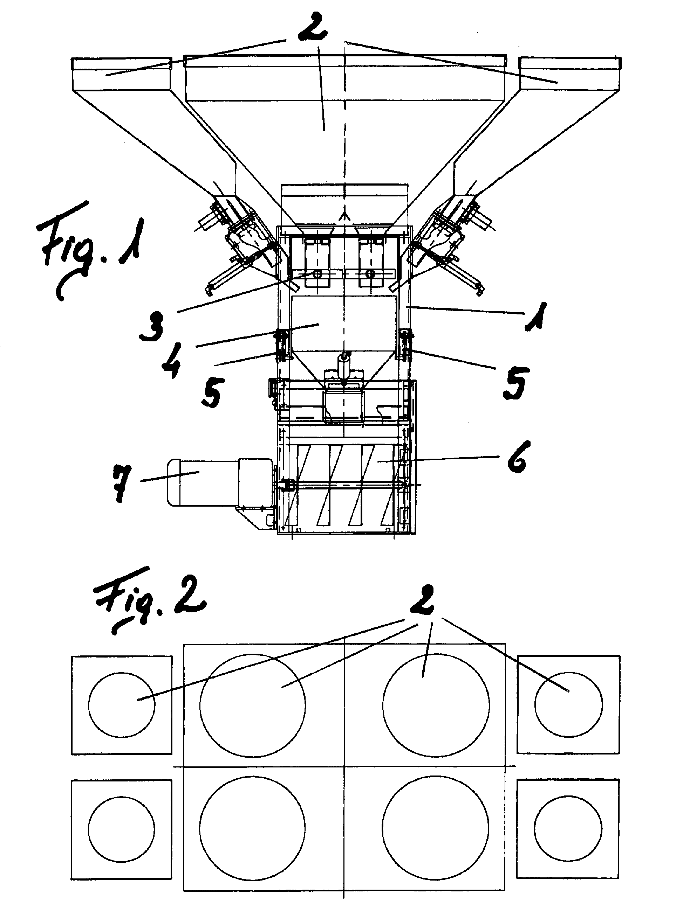

Gemäß der Fig. 2, die eine Draufsicht auf die Dosiereinrichtung gemäß der Fig. 1 zeigt, sind mehrere Materialtrichter 2 am Gehäuse 1 vorgesehen. Wie schon erwähnt, sind für die überproportionalen Mengen der Rezeptur von Kunststoff-Granulat, vorzugsweise für die Neuware und/oder das Mahlgut, mindestens zwei Materialtrichter 2 vorgesehen. Dadurch werden diese überproportionalen Mengen von Kunststoff-Granulat, vorzugsweise die Neuware und/oder Mahlgut, mit einer Parallelfüllung oder Mehrfachparallelfüllung, aus mindestens zwei Materialtrichtern 2, in den Wiegebehälter 4 abgefüllt. Der Durchsatz für diese Arten der Kunststoff-Granulate wird immens erhöht, wodurch die Batch-Zusammenstellung in kürzester Zeit erfolgt.

Wie bereits erwähnt, stehen meist Neuware und Mahlgut in einem gewichtsmäßigen Missverhältnis zu Masterbatch und Additiv. So können die Anteile von Neuware und Mahlgut etwa 70% und 30% betragen und Masterbatch bzw. Additiv 1 bis 2% bezogen auf die Neuware betragen. Aufgrund dieser Tatsache sind durch die Parallel- oder Mehrfachabfüllung hohe Rationalisierungen gewährleistet.

Wie schon erwähnt, ist die Plattenformwägezelle 5 mit den Dosierventilen 3 über eine Steuerung oder Regelung verbunden. Die Steuerung umfasst eine Rechnereinheit, insbesondere einen Mikroprozessor, der der Messwert der Plattenformwägezelle 5 zugeführt wird. In der Rechnereinheit ist die Rezeptur gespeichert, wobei die Steuerung die Dosierventile 3 entsprechend ansteuert und die Menge der einzelnen Arten der Kunststoff-Granulate abfüllt.

Das Verfahren zur Dosierung von Schüttgut, insbesondere von Kunststoff-Granulat, für Kunststoff-Granulat verarbeitende Maschinen, insbesondere für Spritzgussmaschinen, erfolgt in der Art und Weise, dass verschiedene Mengen von verschiedenen Kunststoff-Granulaten nach frei einstellbaren Rezepten in Batches abgefüllt werden. Dabei werden die für die Rezeptur überproportionalen Mengen von Kunststoff-Granulat, vorzugsweise die Neuware und/oder Mahlgut, mit einer Parallelfüllung oder Mehrfachparallelfüllung, aus mindestens zwei Materialtrichtern 2, in den Wiegebehälter 4 abgefüllt. Jede einzelne Art eines Kunststoff-Granulates, wie beispielsweise Neuware, Masterbatch, Additive und/oder Mahlgut, wird aus dem Materialtrichter 2 über das Dosierventil 3 nacheinander in einen Wiegebehälter 4 abgelassen, im Wiegebehälter 4 gewogen und die Rezeptmenge anschließend in einen Kugelmischer 6 vermischt. Die Menge wird während der Abfüllung kontinuierlich gewogen. Die Parallelfüllung oder die Mehrfachparallelfüllung wird knapp vor Erreichen der Zielmenge, vorzugsweise bei etwa 95% der Zielmenge, gestoppt.

Nach Beendigung der Parallelfüllung oder Mehrfachparallelfüllung wird eine andere Art eines Kunststoff-Granulates, beispielsweise das Additiv und/oder das Masterbatch, in den Wiegebehälter 4 dosiert und auf Grund dieser tatsächlich zudosierten Menge die Zielmenge der Parallelfüllung oder Mehrfachparallelfüllung an Kunststoff-Granulat-Menge bestimmt und in den Wiegebehälter 4 abgefüllt. Zur Erreichung der Zielmenge der Parallelfüllung erfolgt die Befüllung des Wiegebehälters 4 nur aus einem Materialtrichter 2 über das Dosierventil 3.

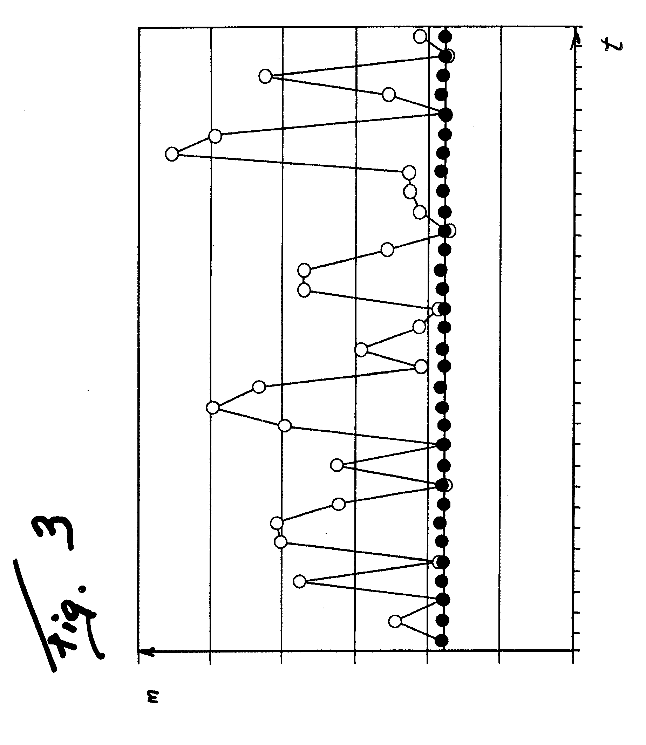

Wie bereits aufgezeigt ist auch einer der gravierenden Vorteile dieses Verfahrens, dass eine Überdosierung vermieden wird. Gemäß der Fig. 3 ist ein Diagramm gezeigt, in dem die Menge in Prozent über den einzelnen Batches gezeigt wird. Die Kurve mit den weißen Kreisen zeigt den Stand der Technik, die durch "Jagen" bzw, statistisches, gegebenenfalls zeitbasiertes, Durchschnittsrechnen sich ergibt und die Kurve mit den schwarzen Kreisen, Abfüllungen mit exakter Dosierung nach dem oben beschriebenen Verfahren.

Bei dem in Rede stehenden Verfahren wird durch den Regelalgorithmus mit der Steuerung eine präzise Dosierung erreicht. Darüber hinaus gewährleistet die RTLS-Technologie (Real Time Live Scale-Technologie) eine zweistufige progressiv genauer werdende Dosierung für ein exaktes Zielgewicht.

## Patentansprüche

1. Verfahren zur Dosierung von Schüttgut, insbesondere von Kunststoff-Granulat, für Kunststoff-Granulat verarbeitende Maschinen, insbesondere für Spritzgussmaschinen, wobei verschiedene Mengen von verschiedenen Kunststoff-Granulaten nach frei einstellbaren Rezepten in Batches abgefüllt werden und jede einzelne Art eines Kunststoff-Granulates, wie beispielsweise Neuware, Masterbatch, Additive und/oder Mahlgut, aus Materialtrichtern über je ein Materialventil nacheinander in einen Wiegebehälter abgelassen wird, im Wiegebehälter gewogen und die Rezeptmenge anschließend in einen Mischer vermischt wird, **dadurch gekennzeichnet, dass** die für die Rezeptur überproportionale Menge von Kunststoff-Granulat, vorzugsweise die Neuware und/oder Mahlgut, mit einer Parallelfüllung oder Mehrfachparallelfüllung, aus mindestens zwei Materialtrichtern (2), in den Wiegebehälter (4) abgefüllt wird, dass die Parallelfüllung oder die Mehrfachparallelfüllung knapp vor Erreichen der Zielmenge, vorzugsweise bei etwa 95% der Zielmenge, gestoppt wird und dass zur Erreichung der Zielmenge der Parallelfüllung die Befüllung des Wiegebehälters (4) nur aus einem Materialtrichter (2) über ein Materialventil erfolgt.

2. Verfahren nach Anspruch 1, **dadurch gekennzeichnet, dass** die Menge während der Abfüllung kontinuierlich gewogen wird.

3. Verfahren nach Anspruch 1 oder 2, **dadurch gekennzeichnet, dass** nach Beendigung der Parallelfüllung oder Mehrfachparallelfüllung eine andere Art eines Kunststoff-Granulates, beispielsweise das Additiv und/oder das Masterbatch, in den Wiegebehälter (4) dosiert wird und auf Grund dieser tatsächlich zudosierten Menge die Zielmenge der Parallelfüllung oder Mehrfachparallelfüllung an Kunststoff-Granulat-Menge bestimmt und in den Wiegebehälter (4) abgefüllt wird.

4. Einrichtung angepasst zur Durchführung des Verfahrens nach einem oder mehreren der Ansprüche 1 bis 3, wobei für jede Art eines Kunststoff-Granulates mindestens ein Materialtrichter mit einem Materialventil vorgesehen ist und unter dem Materialventil ein mit einer Waage verbundener Wiegebehälter und unter dem Wiegebehälter ein Mischer angeordnet sind, wobei für die Waage und die Materialventile eine Steuerung vorgesehen ist, **dadurch gekennzeichnet, dass** jeder Materialtrichter (2) ein als Dosierventil (3) ausgebildetes Materialventil aufweist, wobei das Dosierventil (3) als selbstschließendes, über einen, vorzugsweise am Gehäuse (1) angeordneten, Pneumatikzylinder öffnendes Materialventil ausgebildet ist und dass als Waage eine Plattenformwägezelle (5) und als Mischer ein Kugelmischer (6) vorgesehen sind.

5. Einrichtung nach Anspruch 4, **dadurch gekennzeichnet, dass** die Steuerung eine Rechnereinheit, insbesondere einen Mikroprozessor, umfasst, der der Messwert der Plattenformwägezelle (5) zugeführt ist und die Rechnereinheit, in der die Rezeptur gespeichert ist, die Menge der einzelnen Arten der Kunststoff-Granulate errechnet und die Dosierventile (3) entsprechend ansteuert.

## Claims

1. Method for dosing bulk material, in particular plastic granulate, for machines machining plastic granulate, in particular for injection moulding machines, wherein different amounts of different plastic granulates are introduced in batches according to freely adjustable formulations and each type of plastic granulate, such as for example new material, main batch, additives and/or material to be ground, are successively passed through material funnels to a weighing container via a material valve, weighed in the weighing container and the formulation is subsequently mixed in a mixer, **characterised in that** the amount of plastic granulate, preferably new material and/or material to be ground, which is more than the formulation is introduced in parallel or multi-parallel from at least two material funnels (2) in the weighing container (4), that the parallel or multi-parallel filling is stopped just before the target quantity is reached, preferably at approximately 95% of the target quantity, and that the weighing container (4) is only filled from one material funnel (2) via a material valve to reach the target quantity of the parallel filling.

2. Method in accordance with claim 1, **characterised in that** the quantity is continuously weighed during the filling.

3. Method in accordance with claim 1 or 2, **characterised in that** when the parallel or multi-parallel filling is finished, a different type of plastic granulate, for example the additive and/or the main batch, is admeasured in the weighing container (4) and based on this actual quantity admeasured the target quantity of the parallel or multi-parallel filling of plastic granulate quantity is determined and introduced in the weighing container (4).

4. Device adapted for implementation of the method in accordance with one or more of claims 1 to 3, wherein at least one material funnel with a material valve is provided for each type of a plastic granulate and a weighing container connected with a balance is arranged under the material valve and under said weighing container a mixer, wherein a control system is provided for the balance and the material valves, **characterised in that** each material funnel (2) comprises a material valve designed as a dosing valve (3), wherein the dosing valve (3) is designed as a self-closing material valve opened through a pneumatic cylinder, which is preferably arranged on the housing (1), and that a platform load cell (5) is provided as balance and a ball mixer (6) as mixer.

5. Device in accordance with claim 4, **characterised in that** the control system comprises a computer unit, in particular a microprocessor, which is supplied with the value measured by the platform load cell (5) and the computer unit, in which the recipe is stored, calculates the quantity of the individual types of plastic granulates and controls the dosing valves (3) accordingly.

## Revendications

1. Procédé pour le dosage de matériaux en vrac, en particulier de granulés de matière plastique, pour les machines de traitement de granulés de matière plastique, en particulier pour les machines de moulage par injection, différentes quantités de différents granulés de matière plastique étant dosés par lots conformément à des recettes librement ajustables et chaque type de granulés de matière plastique, tel que par exemple la matière vierge, le masterbatch, les additifs et/ou la matière rebroyée, étant successivement déversé dans un récipient de pesage à partir de trémies par l'intermédiaire d'une vanne de produit. Les granulés de matière plastique sont ensuite pesés dans le récipient de pesage et la quantité de recette est finalement mélangée dans un mélangeur, **caractérisé en ce que** la quantité disproportionnée pour la recette de granulés de matière plastique, de préférence la matière vierge ou broyée, soit dosée dans le récipient de pesage (4) par un remplissage parallèle ou multi-parallèle à partir d'au moins deux trémies (2) et **caractérisé en ce que** le remplissage parallèle ou multi-parallèle soit arrêté juste avant d'atteindre la quantité cible, de préférence à environ 95 % de la quantité cible, et que le remplissage du récipient de pesage (4) ne se fasse qu'à partir d'une trémie (2) par l'intermédiaire d'une vanne de produit pour atteindre la quantité cible du remplissage parallèle.

2. Procédé selon la revendication 1, **caractérisé en ce que** la quantité soit continuellement pesée pendant le remplissage.

3. Procédé selon les revendications 1 ou 2, **caractérisé en ce qu'**un autre type de granulés de matière plastique soit dosé dans le récipient de pesage (4), par exemple l'additif et/ou le masterbatch, après la fin du remplissage parallèle ou multi-parallèle. Sur la base de cette quantité réellement dosée, la quantité cible du remplissage parallèle ou multi-parallèle de la quantité de granulés de matière plastique est déterminée et dosée dans le récipient de pesage (4).

4. Installation adaptée à l'exécution du procédé selon une ou plusieurs des revendications 1 à 3, au moins une trémie avec une vanne de matériau étant prévue pour chaque type de granulés de matière plastique et un récipient de pesage connecté à une balance étant disposé sous la vanne de matériau et un mélangeur se trouvant sous le récipient de pesage, un mécanisme de commande étant prévu pour la balance et les vannes de matériau, **caractérisée en ce que** chaque trémie (2) possède une vanne de dosage (3) conçue sous forme de vanne de matériau, la vanne de dosage (3) conçue sous forme de vanne de matériau à fermeture automatique ouvrable par un cylindre pneumatique ouvrant la vanne de matériau, ledit cylindre étant disposé de préférence sur l'enceinte (1), et **caractérisée en ce que** soient prévus une cabine de pesage (5) comme balance et un mélangeur sphérique (6) comme mélangeur.

5. Installation selon la revendication 4, **caractérisée en ce que** le mécanisme de commande comprenne une unité de calcul, en particulier un microprocesseur, qui transmet les valeurs de mesure de la cabine de pesage (5), que l'unité de calcul dans laquelle la composition est enregistrée calcule la quantité de chaque type de granulés de matière plastique et qui commande de manière adéquate la vanne de dosage (3).
